(19)

Europäisches
Patentamt
European
Patent Office
Office européen
des brevets

(11) **EP 4 734 459 A1**

(12) **EUROPEAN PATENT APPLICATION**

(43) Date of publication:
**29.04.2026 Bulletin 2026/18**

(21) Application number: **25207937.1**

(22) Date of filing: **10.10.2025**

(51) International Patent Classification (IPC):
*H04L 25/02* (2006.01)

(52) Cooperative Patent Classification (CPC):
**H04L 25/021; H04L 25/0204**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.10.2024 GB 202415828**

(71) Applicant: **Nokia Solutions and Networks Oy
02610 Espoo (FI)**

(72) Inventors:
• **HENNINGER, Marcus Roland
  Ludwigsburg (DE)**
• **MANDELLI, Silvio
  Ludwigsburg (DE)**

(74) Representative: **Nokia EPO representatives
Nokia Technologies Oy
Karakaari 7
02610 Espoo (FI)**

(54) **APPARATUS AND METHOD FOR A WIRELESS COMMUNICATION SYSTEM**

(57)      An apparatus for a device for a wireless communication system, the apparatus comprising at least one processor, and at least one memory storing instructions that, when executed by the at least one processor, cause the apparatus to: determine (202) at least one candidate peak (CP) of a sensing power information tensor (SPIT) derivable from a complex sensing information tensor (CSIT) acquired with a first mask and associated with multidimensional channel state information (CSI-RXFR) obtained based on at least one received radio frame (RXFR), determine (204), for the at least one candidate peak (CP), refined peak information (PI-REF) based on the first mask and a predetermined second mask.

**Fig. 3**

200 — DETERMINE COMPLEX SENSING INFORMATION TENSOR

↓ CSIT

202 — DETERMINE AT LEAST ONE CANDIDATE PEAK OF SENSING POWER INFORMATION TENSOR ASSOCIATED WITH COMPLEX SENSING INFORMATION TENSOR

↓ CP; N-CP

204 — DETERMINE, FOR AT LEAST ONE CANDIDATE PEAK, REFINED PEAK INFORMATION

↓ PI-REF

205 — UPDATE, BASED ON REFINED PEAK INFORMATION, COMPLEX SENSING INFORMATION TENSOR

↓ CSIT-UPD

207 — UPDATE, BASED ON REFINED PEAK INFORMATION, SENSING POWER INFORMATION TENSOR

↓ SPIT-UPD

209 — DETERMINE WHETHER CANDIDATE PEAK IS VALID BASED ON AT LEAST ONE OF SENSING POWER INFORMATION TENSOR OR UPDATED SENSING POWER INFORMATION TENSOR

↓

EP 4 734 459 A1

## EP 4 734 459 A1

**Description**

**Field of the Disclosure**

Various example embodiments relate to an apparatus for a device for a wireless communication system.

Further example embodiments relate to an apparatus for a device for a wireless communication system.

**Background**

Wireless communication systems may comprise several devices, such as base stations and/or terminal devices, configured to exchange information via wireless data transmission. Recent advancements have led to the proposal of Integrated Sensing and Communication (ISAC), which merges aspects of wireless communication and sensing functionalities within the same network infrastructure. In conventional approaches, ISAC enables devices not only to exchange data but also to perform environmental sensing tasks, such as object detection, localization, and tracking, using the same wireless signals employed for communication.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a device for a wireless communication system, the apparatus comprising at least one processor, and at least one memory storing instructions that, when executed by the at least one processor, cause the apparatus to: determine at least one candidate peak of a sensing power information tensor derivable from a complex sensing information tensor acquired with a first mask and associated with multidimensional channel state information obtained based on at least one received radio frame, determine, for the at least one candidate peak, refined peak information based on the first mask and a predetermined, e.g., desired, second mask, e.g., a second mask with desired properties. In some examples, this enables a precise evaluation of the at least one candidate peak, for example determining whether the at least one candidate peak is a true, e.g., valid peak or whether the at least one candidate peak is an invalid peak that may be caused by impulsive sidelobes.

In some examples, at least one of the wireless communication system or the device for the wireless communication system may adhere to and/or may be based on some accepted (and/or planned) standard, such as, e.g. 3G, 4G, 5G, 6G, or some other wireless communication standard.

In some examples, the device for the wireless communication system may e.g. comprise or represent a base station, e.g., gNB.

In some other examples, however, the device for the wireless communication system may e.g. comprise or represent a terminal device.

In some examples, the device for the wireless communication system may, e.g., use a time division duplex (TDD)-based frame structure, e.g., also for sensing, the frame structure comprising first time period(s) for transmitting signals in a first, e.g., downlink (DL), direction, and, for example, subsequent second time period(s) for receiving signals in a second, e.g., uplink (UL), direction.

As an example, in an orthogonal frequency division multiplexing (OFDM)-based system, a TDD-based frame structure may comprise downlink periods with $M_{DL}$ many OFDM symbols and subsequent uplink periods with $M_{UL}$ many OFDM symbols per pattern, wherein, for example, $M_{DL} > M_{UL}$. In some examples, $M_{DL}=104$ and $M_{UL}=36$ may be used to form a single DL/UL pattern. In some examples, the TDD-based frame structure may, e.g., comprise eight subsequent repetitions of the single DL/UL pattern.

Further details of example frame structures, e.g., for ISAC, are explained in [Reference 1], the contents of which are hereby incorporated in its entirety: P. Tosi, M. Henninger, L. Giroto de Oliveira, and S. Mandelli, "Feasibility of Non-Line-of-Sight Integrated Sensing and Communication at mmWave," arXiv preprint (v1): https://arxiv.org/abs/2406.12828, 2024. [Reference 1]

In some conventional approaches, signals comprising the above-described TDD-based frame structure may be processed for sensing, e.g., ISAC, for example by determining information characterizing the complex sensing information tensor, e.g., based on an acquisition of channel state information (CSI), e.g., based on the at least one received radio frame. In some examples, the complex sensing information tensor may characterize an environment response, e.g., in the form of at least one range/speed periodogram associated with a received radio frame comprising the above-described TDD-based frame structure, as, e.g., described in [Reference 1], see, for example Section III., "TIME DIVISION DUPLEX IN ISAC".

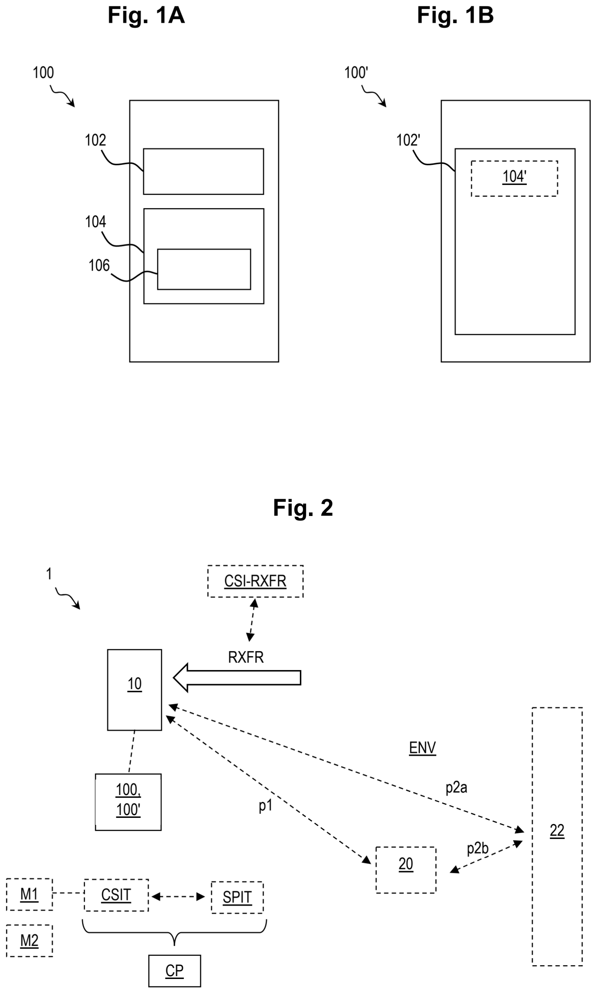

In some examples, channel state information (CSI), e.g., organized in tensor form, e.g., matrix form, e.g., as CSI matrix **H,** of a received radio frame exhibiting the TDD structure as explained above (and as shown in Fig. 1 of [Reference 1]) may be obtained as known by the skilled person, and, based on the CSI matrix **H,** a range/speed periodogram may be obtained by computing a discrete Fourier transform (DFT) over $M$ many symbols (e.g., columns of the CSI matrix **H**) and an inverse DFT (IDFT) over $N$ many subcarriers (e.g., associated with the rows of CSI matrix **H**).

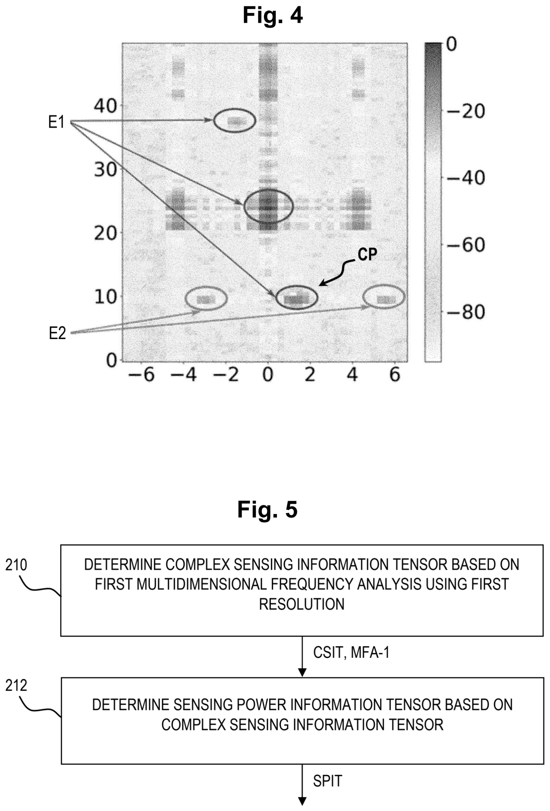

However, setting empty UL parts of the radio frame to zero, as, e.g., explained in [Reference 1], subsection III-A, may act as a windowing effect on the CSI matrix H (see equation (7) in [Reference 1]) and may cause so-called impulsive sidelobes (i.e., per se undesired fake peaks), e.g., in a speed domain, as will be explained further below with reference to Fig. 4. In some examples, this windowing may correspond to a mask, e.g., the first mask, based on which the complex sensing information tensor according to the disclosure may be acquired. As this first mask may cause the undesired fake, e.g., invalid, peaks, it is per se undesired, and the principle according to the disclosure may enable to validate a candidate peak based on the refined peak information taking into consideration the predetermined second mask. Further details related to the abovementioned windowing effect due to a TDD-based frame structure are provided in subsection III-A of [Reference 1].

In some examples, the undesired impulsive sidelobes may be well above a background noise level and may therefore pose the danger of wrongly being declared sensing targets, e.g., by conventional peak detection algorithms, e.g., based on the principles of constant false alarm rate (CFAR) detection. However, as discussed in more detail in [Reference 1], it may be desirable to process the full CSI matrix **H** to achieve the full processing gain and the maximum speed resolution by keeping a full time-aperture (e.g., radio frame duration of 10 ms).

In some examples, the principle according to the disclosure enables a reliable detection of actual sensing targets, e.g., valid peaks, e.g., associated with the complex sensing information tensor and/or the sensing power information tensor, e.g., in a periodogram which may also comprise (unwanted) impulsive sidelobes. In some examples, this reliable detection may comprise deciding whether a peak (e.g., detected peak) is caused by a "true" target contribution, or due to an impulsive sidelobe. In some examples, the deciding may be based on the refined peak information.

In some examples, the principle according to the disclosure further enables to obtain a refined or "cleaned" version of information characterizing the complex sensing information tensor and/or the sensing power information tensor, e.g., a periodogram as may be obtained with TDD transmission scenarios, i.e., with no (or significantly reduced) impulsive sidelobes, which refined version may, in some examples, e.g., be used for further (e.g., OFDM radar) processing.

In some examples, the principle according to the disclosure further enables to avoid a comparatively large computational complexity as required by some conventional approaches, which are, for example, based on Multiple Signal Classification (MUSIC), see R. Schmidt, "Multiple Emitter Location and Signal Parameter Location", in IEEE Transactions on Antenna and Propagation, vol. 34, 1986.

Note that in some examples, determining the at least one candidate peak may be performed for any type of complex sensing information, e.g., as represented by the complex sensing information tensor, which may, e.g., be determined based on a corresponding CSI tensor as may be provided based on processing one or more received radio frames, as known by the skilled person. In some examples, considering two-dimensional complex sensing information, the complex sensing information tensor may be represented by a complex range/speed periodogram. Note, however, that the principle according to the disclosure is not limited to processing two-dimensional complex sensing information, such as complex range/speed periodograms, but rather also applies to processing, e.g., determining, candidate peaks, e.g., local or global extrema, of other multi-dimensional data.

In other words, the principle according to the disclosure is not, e.g., only, applicable to a two-dimensional range-speed (e.g., Doppler) periodogram, as, e.g., obtained with a TDD frame structure. Rather, the principle according to the disclosure may be applied to any (multi-dimensional) tensor (e.g., comprising time, frequency, and antenna domains), e.g., the abovementioned complex sensing information tensor, as may, e.g., be obtained in the presence of holes in one or more sampling domains (e.g., before performing a Fourier processing), the holes, e.g., corresponding with the first mask. In some examples, the holes could, for example, be present in frequency domain and the sampling domains could comprise additional domains, e.g., the spatial domain (e.g., multiple antennas). In such cases, it is also possible to apply the principle according to the disclosure, e.g., with minor modifications.

In some examples, the principle of the disclosure may be of particular use in case of periodical or almost periodical "holes", like with repetitive TDD patterns, as explained above.

In some examples, the instructions, when executed by the at least one processor, cause the apparatus to: perform at least one of: a) updating, based on the refined peak information, the complex sensing information tensor to obtain an updated complex sensing information tensor, or b) updating, based on the refined peak information, the sensing power information tensor to obtain an updated sensing power information tensor.

In some examples, the instructions, when executed by the at least one processor, cause the apparatus to: to determine whether the candidate peak is valid based on at least one of the sensing power information tensor or the updated sensing power information tensor.

In some examples, determining the at least one candidate peak comprises determining a predetermined number of candidate peaks, e.g., more than one candidate peak.

In some examples, the instructions, when executed by the at least one processor, cause the apparatus to perform at least one of: a) determining the complex sensing information tensor based on a first multidimensional frequency analysis of a multidimensional channel state information tensor characterizing the multidimensional channel state information using a first resolution, or b) determining the sensing power information tensor based on the complex sensing information tensor.

In some examples, obtaining the sensing power information tensor based on the complex sensing information tensor may comprise determining, for each element of the complex sensing information tensor, a respective magnitude or energy value of that element, wherein the so obtained magnitude or energy value represents an element of the sensing power information tensor corresponding with the respective element of the complex sensing information tensor. This principle also applies to determining the updated sensing power information tensor, e.g., based on the updated complex sensing information tensor

In some examples, the instructions, when executed by the at least one processor, cause the apparatus to: determine a refined portion of the complex sensing information tensor for the at least one candidate peak based on a second multidimensional frequency analysis of at least a portion of the multidimensional channel state information tensor associated with the at least one candidate peak using a second resolution, which is higher than the first resolution.

In some examples, the instructions, when executed by the at least one processor, cause the apparatus to: determine a multidimensional complex point spread function associated with the at least one candidate peak based on the refined portion of the complex sensing information tensor, wherein the multidimensional complex point spread function characterizes an impulse response of a point source after a frequency analysis, subtract the multidimensional point spread function from the complex sensing information tensor, wherein an updated complex sensing information tensor is obtained.

In some examples, the instructions, when executed by the at least one processor, cause the apparatus to perform at least one of: a) centering the multidimensional complex point spread function at an estimated location of the at least one candidate peak derivable based on the refined portion of the complex sensing information tensor, or b) scaling the multidimensional complex point spread function, e.g., with a complex coefficient or scaling factor, based on the refined portion of the complex sensing information tensor.

In some examples, the instructions, when executed by the at least one processor, cause the apparatus to: determine an updated sensing power information tensor based on the updated complex sensing information tensor.

In some examples, the instructions, when executed by the at least one processor, cause the apparatus to: determine, for the at least one candidate peak, a contribution to the multidimensional channel state information, e.g., in the form of a multidimensional CSI contribution tensor (e.g., prior to a frequency analysis, e.g., representing aspects of an environment response in a CSI domain), determine, based on the contribution of the at least one candidate peak to the multidimensional channel state information, updated multidimensional channel state information.

In some examples, the instructions, when executed by the at least one processor, cause the apparatus to: perform a frequency analysis based on the updated multidimensional channel state information, wherein an updated complex sensing information tensor is obtained, determine an updated sensing power information tensor based on the updated complex sensing information tensor.

In some examples, determining the updated multidimensional channel state information comprises at least one of: a) removing the contribution of the at least one candidate peak from a portion of the channel state information associated with a downlink direction, or b) adding the contribution of the at least one candidate peak to a portion of the channel state information associated with an uplink direction.

In some examples, the instructions, when executed by the at least one processor, cause the apparatus to: compare the updated sensing power information tensor with the sensing power information tensor, determine whether the at least one candidate peak is a valid peak based on the comparison.

In some examples, the comparing comprises comparing a first power associated with at least one bin of the at least one candidate peak, e.g., a location where impulsive sidelobes would appear, in the updated sensing power information tensor with a second power associated with at least one corresponding bin of the at least one candidate peak in the sensing power information tensor, wherein determining whether the at least one candidate peak is a valid peak comprises determining that the at least one candidate peak is a valid peak if the first power is less than the second power.

In some examples, the instructions, when executed by the at least one processor, cause the apparatus to: determine a predetermined number of candidate peaks, and performing an iterative peak checking for the predetermined number of candidate peaks, the iterative peak checking comprising: selecting a specific candidate peak of the predetermined number of candidate peaks, determining whether the selected candidate peak is valid, if the selected candidate peak is valid, updating the complex sensing information tensor to obtain a or the updated complex sensing information tensor and updating the sensing power information tensor to obtain a or the updated sensing power information tensor, and repeating at least one of the aspects of the iterative peak checking based on the updated complex sensing information tensor if at least one further candidate peak of the predetermined number of candidate peaks has not yet been checked.

Some examples relate to an apparatus for a device for a wireless communication system, the apparatus comprising means for determining at least one candidate peak of a sensing power information tensor derivable from a complex sensing information tensor acquired with a first mask and associated with multidimensional channel state information obtained based on at least one received radio frame, determining, for the at least one candidate peak, refined peak information based on the first mask and a predetermined second mask.

In some examples, the means may, e.g., comprise at least one processor, and at least one memory storing instructions that, when executed by the at least one processor, cause the apparatus to perform the aforementioned aspects of determining.

In some examples, the means may, e.g., comprise circuitry configured to perform the aforementioned aspects of determining.

Some examples relate to a method for a wireless communication system, comprising: determining at least one candidate peak of a sensing power information tensor derivable from a complex sensing information tensor acquired with a first mask and associated with multidimensional channel state information obtained based on at least one received radio frame, determining, for the at least one candidate peak, refined peak information based on the first mask and a predetermined second mask.

Some examples relate to a device (e.g., base station, e.g., gNB, or terminal device) for a wireless communication system, comprising at least one apparatus according to the disclosure.

Some examples relate to a wireless communication system comprising at least one apparatus according to the disclosure.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A    shows a simplified block diagram according to some examples,

Fig. 1B    shows a simplified block diagram according to some examples,

Fig. 2    shows a simplified block diagram according to some examples,

Fig. 3    shows a simplified flow chart according to some examples,

Fig. 4    shows a range/speed periodogram according to some examples,

Fig. 5    shows a simplified flow chart according to some examples,

Fig. 6    shows a simplified flow chart according to some examples,

Fig. 7    shows a simplified flow chart according to some examples,

Fig. 8    shows a simplified flow chart according to some examples,

Fig. 9    shows a simplified flow chart according to some examples,

Fig. 10    shows a simplified flow chart according to some examples,

Fig. 11    shows a simplified frame pattern according to some examples,

Fig. 12    shows a simplified flow chart according to some examples,

Fig. 13    shows periodograms according to some examples,

Fig. 14      shows periodograms according to some examples,

Fig. 15      shows periodograms according to some examples,

Fig. 16      shows a simplified block diagram according to some examples.

## Description of some Example Embodiments

Some examples, see, for example, Fig. 1A, 2, 3, relate to an apparatus 100 for a device 10 for a wireless communication system 1, the apparatus 100 comprising at least one processor 102, and at least one memory 104 storing instructions 106 that, when executed by the at least one processor 102, cause the apparatus 100 to: determine 202 at least one candidate peak CP of a sensing power information tensor SPIT derivable from a complex sensing information tensor CSIT acquired with a first mask M1 and associated with multidimensional channel state information (CSI) CSI-RXFR obtained based on at least one received radio frame RXFR, determine 204, for the at least one candidate peak CP, refined peak information PI-REF based on the first mask M1 and a predetermined second mask M2. In some examples, this enables a precise evaluation of the at least one candidate peak CP, for example determining whether the at least one candidate peak CP is a true, e.g., valid peak or whether the at least one candidate peak is an invalid peak that may, e.g., be caused by impulsive sidelobes, as explained further below.

In some examples, the refined peak information PI-REF that may be determined based on the first mask M1 and the predetermined second mask M2 may refer to peak information that may be "constructed" (e.g., either in a CSI domain or using a point spread function, see further below for details) leveraging knowledge about the first mask M1 (e.g., holes in a TDD frame) and based on the predetermined second mask M2, which may, e.g., not comprise holes, in contrast to the first mask M1.

In some examples, at least one of the wireless communication system 1 or the device 10 for the wireless communication system 1 may adhere to and/or may be based on some accepted (and/or planned) standard, such as, e.g. 3G, 4G, 5G, 6G, or some other wireless communication standard.

In some examples, the device 10 for the wireless communication system 1 may e.g. comprise or represent a base station, e.g., gNB.

In some other examples, however, the device 10 for the wireless communication system 1 may e.g. comprise or represent a terminal device, e.g., user equipment.

In some examples, the device 10 is configured to perform sensing, e.g., according to a conventional sensing technique using one or more signals of the wireless communication system 1, e.g., according to an ISAC scheme.

As an example, Fig. 2, the device 10 may perform sensing to determine information on at least one object 20 (e.g., person), 22 (e.g., wall of a building) in an environment ENV.

In some examples, Fig. 2, signal information associated with a line-of-sight (LoS) path p1 between the device 10 and the object 20 may be used for the sensing. In some examples, Fig. 2, signal information associated with at least one non-line-of-sight (nLoS) path p2a, p2b between the device 10 and the object 22 may be used for the sensing. In some examples, the signal information associated with the various sensing signal paths p1, p2a, p2b may, e.g., be comprised within the at least one received radio frame RXFR.

In some examples, Fig. 2, the device 10 for the wireless communication system 1 may, e.g., use a time division duplex (TDD)-based frame structure, e.g., also for sensing, the frame structure comprising first time period(s) for transmitting signals in a first, e.g., downlink (DL), direction, and, for example, subsequent second time period(s) for receiving signals in a second, e.g., uplink (UL), direction.

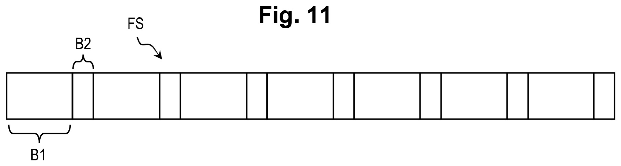

As an example, Fig. 11, in an orthogonal frequency division multiplexing (OFDM)-based system, a TDD-based frame structure FS may comprise DL periods with $M_{DL}$ many OFDM symbols collectively indicated by bracket B1 of Fig. 11 and subsequent UL periods with $M_{UL}$ many OFDM symbols per pattern collectively indicated by bracket B2, wherein, for example, $M_{DL} > M_{UL}$. In some examples, $M_{DL}=104$ and $M_{UL}=36$ may be used to form a single DL/UL pattern. In some examples, the TDD-based frame structure FS may, e.g., comprise eight subsequent repetitions of the single DL/UL pattern.

Further details of example frame structures, e.g., for ISAC, are explained in [Reference 1], the contents of which are hereby incorporated in its entirety: P. Tosi, M. Henninger, L. Giroto de Oliveira, and S. Mandelli, "Feasibility of Non-Line-of-Sight Integrated Sensing and Communication at mmWave," arXiv preprint (v1): https://arxiv.org/abs/2406.12828, 2024. [Reference 1]

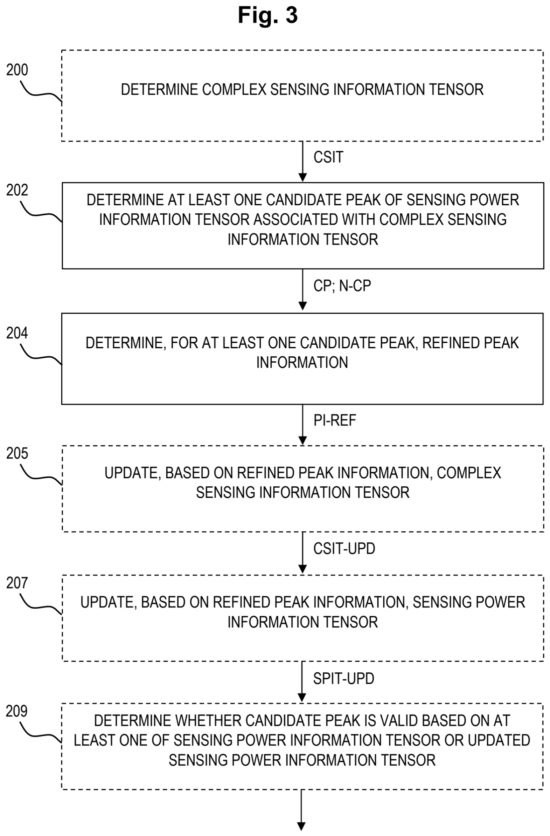

In some conventional approaches, signals comprising the above-described TDD-based frame structure may be processed for sensing, e.g., ISAC, for example by determining information characterizing the complex sensing information tensor CSIT, see the optional block 200 of Fig. 3, e.g., based on an acquisition of channel state information (CSI), e.g., based on the at least one received radio frame RXFR.

In some examples, the complex sensing information tensor CSIT may characterize an environment response, e.g., in the form of at least one range/speed periodogram associated with a received radio frame comprising the above-described TDD-based frame structure, as, e.g., described in [Reference 1], see, for example Section III., "TIME DIVISION DUPLEX IN ISAC".

In some examples, channel state information (CSI), e.g., organized in tensor form ("CSI tensor"), e.g., matrix form, e.g., as CSI matrix **H,** of a received radio frame exhibiting the TDD structure as explained above (and as shown in Fig. 1 of [Reference 1]) may be obtained as known by the skilled person, and, based on the CSI matrix **H,** a range/speed periodogram may be obtained by computing a discrete Fourier transform (DFT) over $M$ many symbols (e.g., columns of the CSI matrix **H**) and an inverse DFT (IDFT) over $N$ many subcarriers (e.g., associated with the rows of CSI matrix **H**).

However, setting empty UL parts of the radio frame to zero, as, e.g., explained in [Reference 1], subsection III-A, may act as a windowing effect on the CSI matrix **H** (see equation (7) in [Reference 1]) and may cause so-called impulsive sidelobes (i.e., per se undesired fake peaks), e.g., in a speed domain, as will be explained further below with reference to Fig. 4. In some examples, this windowing effect may correspond to the first mask M1 (Fig. 2) based on which the complex sensing information tensor CSIT according to the disclosure may be acquired. As this first mask M1 may cause the undesired fake, e.g., invalid, peaks, it is per se undesired, and the principle according to the disclosure may enable to validate a candidate peak CP based on the refined peak information PI-REF taking into consideration the predetermined second mask M2.

In some examples, the second mask M2 represents a situation where no undesired windowing effect, i.e., a rectangular mask (consisting of all ones, i.e., no gaps), occurs or where a predetermined, e.g., desired, windowing function such as a Chebyshev window is used. In other words, in some examples, the second mask M2, in contrast to the first mask M1, does not imply any undesired amplitude modification of the CSI tensor but may, e.g., imply a desired amplitude modification of the CSI tensor to achieve desired properties, e.g., after frequency analysis (e.g., constant sidelobe level with Chebyshev windowing).

Further details related to the abovementioned windowing effect due to a TDD-based frame structure are provided in subsection III-A of [Reference 1].

An example range/speed periodogram, e.g., as an example depiction of two-dimensional complex sensing information, is depicted by Fig. 4, wherein Doppler shift information, e.g., characterizing a relative radial speed (e.g., with respect to the sensing device 10), is associated with a horizontal axis (e.g., presently ranging from "-6" to "6", e.g., m/s), and wherein a range (e.g., in m) is associated with a vertical axis (on the left in Fig. 4). Note that the further scale on the right of Fig. 4 indicates a normalized power (e.g., in dB) of the corresponding elements, e.g., bins, of the example range/speed periodogram of Fig. 4.

In Fig. 4, several peaks of the periodogram are collectively denoted with reference sign E1. These peaks correspond with signal information in the received radio frame RXFR (Fig. 2) that is associated with a comparatively large power. In Fig. 4, further peaks, which are collectively denoted with reference sign E2, may also be present, due to effects explained in detail further below. These further peaks E2 are, at least in some examples, undesired, and the principle according to the disclosure may enable to discriminate between true, e.g., valid peaks E1 and the undesired, e.g., invalid, peaks E2, thus, e.g., improving a reliability of sensing based on the received radio frame RXFR.

In some examples, setting empty UL parts of the received radio frame RXFR to zero, as, e.g., explained in [Reference 1], subsection III-A, may act as a windowing effect on the CSI matrix **H** (see Equation (7) in [Reference 1]) and may cause so-called impulsive sidelobes, i.e., the per se undesired fake peaks E2, see Fig. 4, which are arranged along the horizontal speed domain, e.g., surrounding one of the valid peaks E1 present at the respective range coordinate "10". Further details related to the abovementioned windowing effect due to the TDD-based frame structure are provided in subsection III-A of [Reference 1].

In some examples, Fig. 4, the undesired impulsive sidelobes E2 may be well above a background noise level and may therefore pose the danger of wrongly being declared sensing targets, e.g., by conventional peak detection algorithms, e.g., based on the principles of constant false alarm rate (CFAR) detection. However, as discussed in more detail in [Reference 1], it may be desirable to process the full CSI matrix **H** to achieve the full processing gain and the maximum speed resolution by keeping a full time-aperture (e.g., radio frame duration of 10 ms).

In some examples, the principle according to the disclosure enables a reliable detection of actual sensing targets, e.g., valid peaks, e.g., associated with the complex sensing information tensor CSIT and/or the sensing power information tensor SPIT, e.g. in, but not limited to, a periodogram (Fig. 4) which may also comprise (unwanted) impulsive sidelobes. In some examples, this reliable detection may comprise deciding whether a peak (e.g., detected peak) is caused by a "true" target contribution, or due to an impulsive sidelobe. In some examples, the deciding may be based on the refined peak information PI-REF as obtained, e.g., by block 204 of Fig. 3.

In some examples, the principle according to the disclosure further enables to obtain a "cleaned" version of information characterizing the complex sensing information tensor CSIT and/or the sensing power information tensor SPIT, e.g., a periodogram as may be obtained with TDD transmission scenarios, i.e., with no (or significantly reduced) impulsive sidelobes, which cleaned version may, in some examples, e.g., be used for further (e.g., OFDM radar) processing.

In some examples, the principle according to the disclosure further enables to avoid a comparatively large computational complexity as required by some conventional approaches, which are, for example, based on Multiple Signal Classification (MUSIC), see R. Schmidt, "Multiple Emitter Location and Signal Parameter Location", in IEEE Transactions on Antenna and Propagation, vol. 34, 1986.

Note that in some examples, determining 202 (Fig. 3) the at least one candidate peak CP may be performed for any type of complex sensing information, e.g., as represented by the complex sensing information tensor CSIT, which may, e.g., be determined based on a corresponding CSI tensor (e.g., in a two-dimensional example a CSI matrix **H**) as may be provided based on processing one or more received radio frames RXFR (Fig. 2), as known by the skilled person. In some examples, considering two-dimensional complex sensing information, the complex sensing information tensor may be represented by a complex range/speed periodogram. Note, however, that the principle according to the disclosure is not limited to processing two-dimensional complex sensing information, such as complex range/speed periodograms, but rather also applies to processing, e.g., determining, candidate peaks, e.g., local or global extrema, of other (e.g., higher-), e.g., multidimensional data generally referred herein to as "complex sensing information tensor" CSIT.

It is to be noted that "complex sensing information tensor" does not limit the scope of the present application to a specific tensor-type representation of the respective information. Rather, according to the present disclosure, the complex sensing information tensor CSIT denotes any multidimensional complex sensing information characterizing an environment response as may, e.g., be obtained by receiving one or more radio frames RXFR (Fig. 2). Similarly, the "sensing power information tensor SPIT" is not limited to a tensor-type representation of the sensing power information. Rather, according to the present disclosure, the "sensing power information tensor SPIT" denotes any multi-dimensional sensing power information associated with, e.g., obtainable based on, the complex sensing information tensor CSIT.

In other words, the principle according to the disclosure is not, e.g., only, applicable to a two-dimensional range-speed (e.g., Doppler) periodogram, as, e.g., obtained with a TDD frame structure. Rather, the principle according to the disclosure may be applied to any (multi-dimensional) tensor (e.g., comprising time, frequency, and antenna domains), e.g., the abovementioned complex sensing information tensor CSIT, as may, e.g., be obtained in the presence of holes in one or more sampling domains (e.g., before performing a Fourier processing of the complex sensing information tensor CSIT). In some examples, the holes could, for example, be present in frequency domain and the sampling domains could comprise additional domains, e.g., the spatial domain (e.g., multiple antennas). In such cases, it is also possible to apply the principle according to the disclosure.

In some examples, the principle of the disclosure may be of particular use in case of periodical or almost periodical "holes", like with repetitive TDD patterns, as explained above.

In some examples, Fig. 3, the instructions 106, when executed by the at least one processor 102, cause the apparatus 100 to perform at least one of: a) updating 205, based on the refined peak information PI-REF, the complex sensing information tensor CSIT to obtain an updated complex sensing information tensor CSIT-UPD, or b) updating 207, based on the refined peak information PI-REF, the sensing power information tensor SPIT to obtain an updated sensing power information tensor SPIT-UPD.

In some examples, Fig. 3, the instructions 106, when executed by the at least one processor 102, cause the apparatus 100 to: determine 209 whether the candidate peak CP is valid based on at least one of the sensing power information tensor SPIT or the updated sensing power information tensor SPIT-UPD.

In some examples, Fig. 3, determining 202 the at least one candidate peak CP comprises determining a predetermined number N-CP of candidate peaks, e.g., more than one candidate peak. In some examples, this enables to consider more than one candidate peak, e.g., for further processing according to any of the blocks 202, 204, et seq. of Fig. 3.

In some examples, Fig. 5, the instructions 106, when executed by the at least one processor 102, cause the apparatus 100 to perform at least one of: a) determining 210 the complex sensing information tensor CSIT based on a first multidimensional frequency analysis MFA-1 of a multidimensional channel state information (CSI) tensor characterizing the multidimensional channel state information CSI-RXFR using a first resolution, or b) determining 212 the sensing power information tensor SPIT based on the complex sensing information tensor CSIT.

In some examples, Fig. 5, obtaining, e.g., determining 212, the sensing power information tensor SPIT based on the complex sensing information tensor CSIT may comprise determining, for each element of the complex sensing information tensor CSIT, a respective magnitude or energy value of that element, wherein the so obtained magnitude or energy value represents an element of the sensing power information tensor SPIT corresponding with the respective element of the complex sensing information tensor CSIT. This principle also applies to determining the updated sensing power information tensor SPIT-UPD, e.g., based on the updated complex sensing information tensor CSIT-UPD.

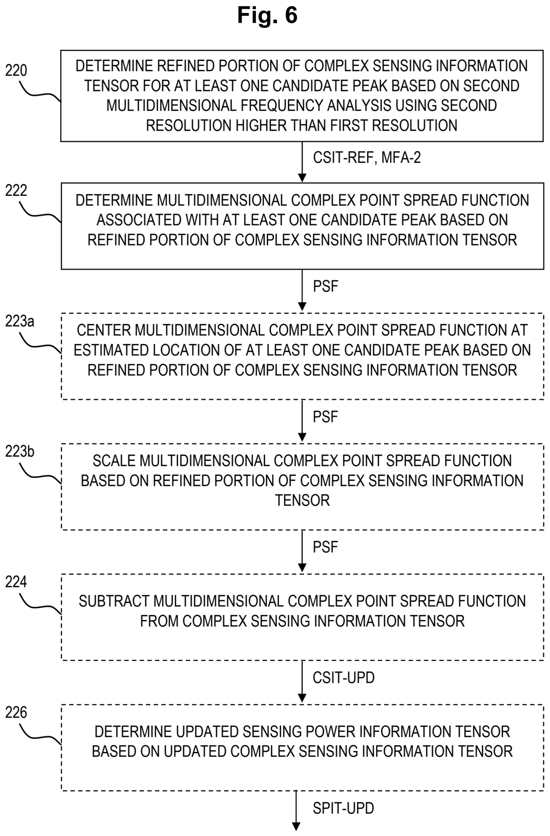

In some examples, Fig. 6, the instructions 106, when executed by the at least one processor 102, cause the apparatus 100 to: determine 220 a refined portion CSIT-REF of the complex sensing information tensor CSIT for the at least one candidate peak CP based on a second multidimensional frequency analysis MFA-2 of at least a portion of the multidimensional channel state information tensor CSIT associated with the at least one candidate peak CP using a second resolution, which is higher than the first resolution for the first multidimensional frequency analysis.

In some examples, Fig. 6, the instructions 106, when executed by the at least one processor 102, cause the apparatus 100 to: determine 222 a multidimensional complex point spread function PSF associated with the at least one candidate peak CP based on the refined portion CSIT-REF of the complex sensing information tensor CSIT, wherein the multidimensional complex point spread function PSF characterizes an impulse response of a point source after a frequency analysis, subtract 224 the multidimensional point spread function PSF from the complex sensing information tensor CSIT, wherein an updated complex sensing information tensor CSIT-UPD is obtained.

In some examples, Fig. 6, the instructions 106, when executed by the at least one processor 102, cause the apparatus 100 to perform at least one of: a) centering 223a the multidimensional complex point spread function PSF at an estimated location of the at least one candidate peak CP derivable based on the refined portion CSIT-REF of the complex sensing information tensor CSIT, or b) scaling 223b the multidimensional complex point spread function PSF, e.g., with a complex coefficient or scaling factor, based on the refined portion CSIT-REF of the complex sensing information tensor CSIT.

In some examples, Fig. 6, the instructions 106, when executed by the at least one processor 102, cause the apparatus 100 to: determine 226 an updated sensing power information tensor SPIT-UPD based on the updated complex sensing information tensor CSIT-UPD.

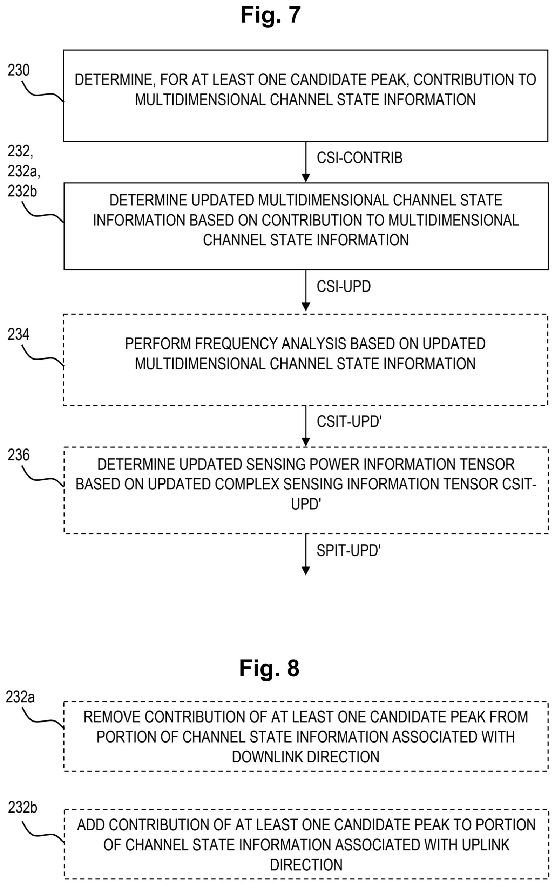

In some examples, Fig. 7, the instructions 106, when executed by the at least one processor 102, cause the apparatus 100 to: determine 230, for the at least one candidate peak CP, a contribution CSI-CONTRIB to the multidimensional channel state information CSI-RXFR, e.g., in the form of a multidimensional CSI contribution tensor (e.g., prior to a frequency analysis, e.g., representing aspects of an environment response in a CSI domain), determine 232, based on the contribution CSI-CONTRIB of the at least one candidate peak CP to the multidimensional channel state information CSI-RXFR, updated multidimensional channel state information CSI-UPD.

In some examples, Fig. 7, the instructions 106, when executed by the at least one processor 102, cause the apparatus 100 to: perform 234 a frequency analysis based on the updated multidimensional channel state information CSI-UPD, wherein an updated complex sensing information tensor CSIT-UPD' is obtained, determine 236 an updated sensing power information tensor SPIT-UPD' based on the updated complex sensing information tensor CSIT-UPD'.

In some examples, Fig. 7, 8, determining 232 the updated multidimensional channel state information CSI-UPD comprises at least one of: a) removing 232a the contribution of the at least one candidate peak from a portion of the channel state information associated with a downlink direction, or b) adding 232b the contribution of the at least one candidate peak to a portion of the channel state information associated with an uplink direction.

In some examples, Fig. 8, the instructions 106, when executed by the at least one processor 102, cause the apparatus 100 to: compare 240 the updated sensing power information tensor SPIT-UPD (e.g., obtained according to block 226 of Fig. 6), SPIT-UPD' (e.g., obtained according to block 236 of Fig. 7) with the sensing power information tensor SPIT, determine 242 whether the at least one candidate peak CP is a valid peak based on the comparison 240.

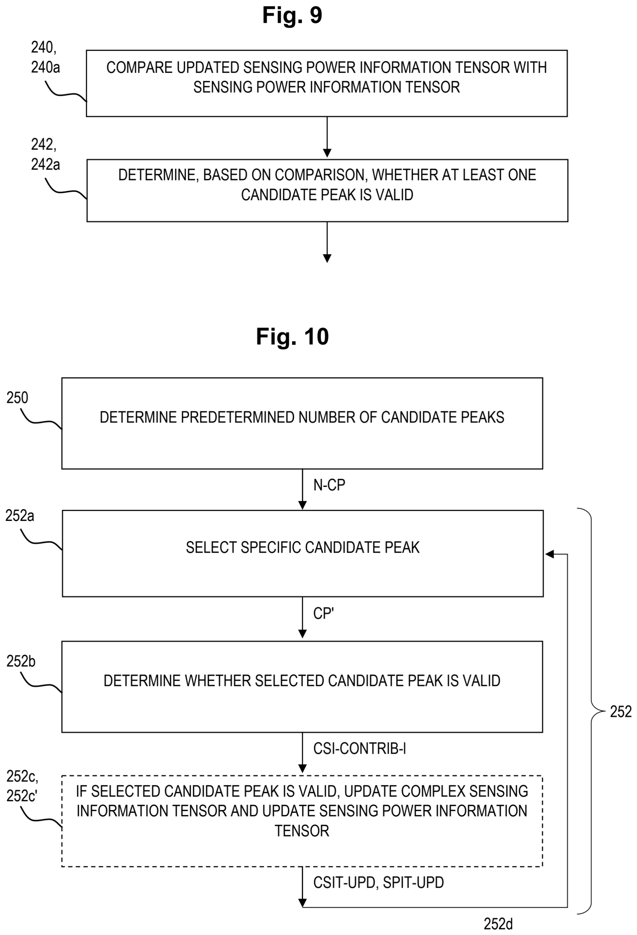

In some examples, Fig. 9, the comparing 240 comprises comparing 240a a first power associated with at least one bin of the at least one candidate peak CP in the updated sensing power information tensor with a second power associated with at least one corresponding bin of the at least one candidate peak in the sensing power information tensor, wherein determining 242 whether the at least one candidate peak CP is a valid peak comprises determining 242a that the at least one candidate peak CP is a valid peak if the first power is less than the second power.

In some examples, Fig. 10, the instructions 106, when executed by the at least one processor 102, cause the apparatus 100 to: determine 250 a predetermined number N-CP of candidate peaks, and performing 252 an iterative peak checking for the predetermined number N-CP of candidate peaks, the iterative peak checking 252 comprising: selecting 252a a specific candidate peak CP' of the predetermined number N-CP of candidate peaks, determining 252b whether the selected candidate peak CP' is valid (e.g., using any approach according to the disclosure, as, e.g., explained above with respect to Fig. 1A et seq.), if the selected candidate peak CP' is valid, updating 252c the complex sensing information tensor to obtain a or the updated complex sensing information tensor CSIT-UPD and updating 252c' the sensing power information tensor to obtain a or the updated sensing power information tensor SPIT-UPD, and repeating 252d at least one of the aspects 252a, 252b, 252c, 252d of the iterative peak checking based on the updated complex sensing information tensor CSIT-UPD (and/or based on the updated sensing power information tensor SPIT-UPD) if at least one further candidate peak of the predetermined number N-CP of candidate peaks has not yet been checked. In other examples, e.g., if the selected candidate peak is not valid, updating 252c the complex sensing information tensor to obtain a or the updated complex sensing information tensor CSIT-UPD and updating 252c' the sensing power information tensor to obtain a or the updated sensing power information tensor SPIT-UPD may be omitted.

Some examples, Fig. 1B, relate to an apparatus 100' for a device 10 for a wireless communication system 1, the apparatus 100' comprising means 102' for determining 202 at least one candidate peak of a sensing power information tensor derivable from a complex sensing information tensor acquired with a first mask and associated with multidimensional channel state information obtained based on at least one received radio frame, determining 204, for the at least one candidate peak, refined peak information based on the first mask and a predetermined second mask.

In some examples, Fig. 1B, the means 102' may, e.g., comprise at least one processor 102 (see, for example, Fig.

1A), and at least one memory 104 storing instructions 106 that, when executed by the at least one processor 102, cause the apparatus 100' to perform the aforementioned aspects of determining 202, 204.

In some examples, the means 102' may, e.g., comprise circuitry 104' configured to perform the aforementioned aspects of determining 202, 204.

Some examples, Fig. 3, relate to a method for a wireless communication system 1, comprising: determining 202 at least one candidate peak of a sensing power information tensor derivable from a complex sensing information tensor acquired with a first mask and associated with multidimensional channel state information obtained based on at least one received radio frame, determining 204, for the at least one candidate peak, refined peak information based on the first mask and a predetermined second mask.

Some examples, Fig. 2, relate to a device 10 (e.g., base station, e.g., gNB, or terminal device) for a wireless communication system 1, comprising at least one apparatus 100, 100' according to the disclosure.

Some examples, Fig. 2, relate to a wireless communication system 1 comprising at least one apparatus 100, 100' according to the disclosure.

In the following, further examples for peak confirmation routines according to the principle of the disclosure are disclosed, that may be applied to any multidimensional tensor (e.g., comprising time, frequency, and antenna domains), e.g., obtained in the presence of holes/gaps in one or more sampling domains (i.e., before Fourier processing). In some examples, such routines may be of particular use in case of periodical or almost periodical holes/gaps, like with the previously explained TDD patterns, see Fig. 11. Therefore, in the following, the further examples of the principle of the disclosure will be explained mainly by using examples of two-dimensional (2D) range-Doppler (speed) periodograms created in the presence of grid holes in time due to a TDD frame structure (as in Fig. 2), however, without loss of generality, as the same principles of the disclosure may, in some other embodiments, also be applied to any complex sensing information tensor CSIT in general.

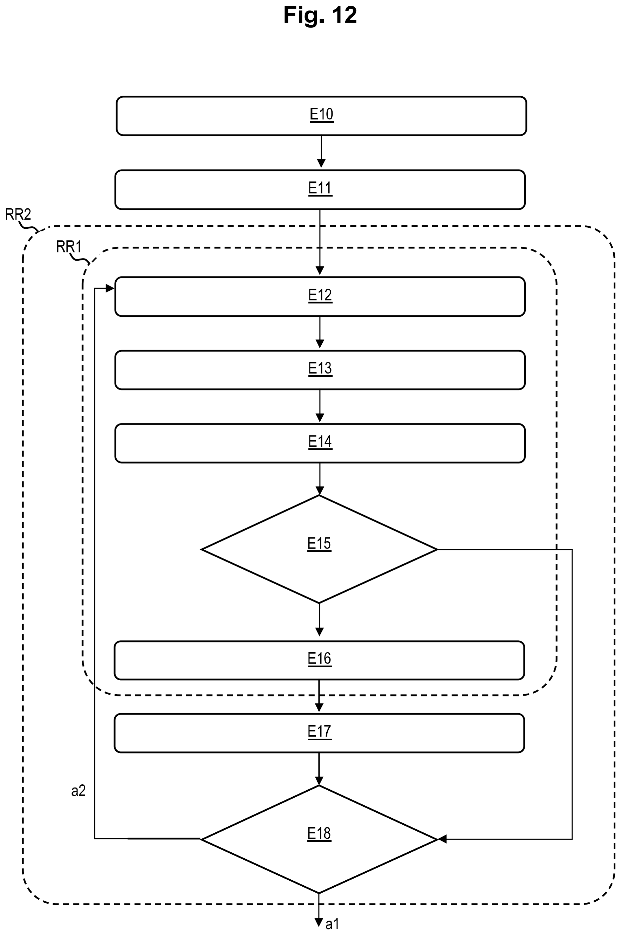

The example flowchart of Fig. 12 illustrates example aspects of a procedure related to confirming that a detected peak, e.g., of the sensing power information tensor SPIT, is caused by a "true" target (e.g., "Peak Confirmation") and, optionally, to obtain a cleaned version of the sensing power information tensor SPIT, e.g., in the form of a periodogram (e.g., "Iterative Periodogram Cleaning").

Element E10 of Fig. 12 symbolizes an initial determination, e.g., computation of an overall environment response according to some examples. In other words, in the first block E10 of Fig. 12, the initial overall environment response is computed, e.g., in the form of the complex sensing information tensor CSIT and, optionally the sensing power information tensor SPIT. To that end, the sensing power information tensor SPIT may, e.g., be computed using an initial (e.g., unchanged) multidimensional CSI tensor, e.g., from sensing operations, e.g., associated with the at least one radio frame RXFR. In some examples, the determination of the sensing power information tensor SPIT may, e.g., be done by Fourier processing of all dimensions of the initial multidimensional CSI tensor to get the complex sensing information tensor CSIT, and then, for example, applying the magnitude squared of the complex numbers of the elements of the complex sensing information tensor CSIT. In some examples, both information CSIT, SPIT may be at least temporarily stored.

In some examples, e.g., in case of time-frequency processing, the sensing power information tensor SPIT may correspond to a 2D range-Doppler periodogram $\mathbf{P}$ (see example in Fig. 4), which may, e.g., be determined, e.g., computed by performing a DFT (or Fourier transformations), over the $M$ OFDM symbols (here for example columns) and an inverse DFT (IDFT) (or inverse Fourier transformations) over the $N$ subcarriers (here for example rows) of the time-frequency CSI matrix $\mathbf{H}$, and then taking the magnitude squared of the complex periodogram $\mathbf{C}$ (e.g., representing the complex sensing information tensor CSIT).

Element E11 of Fig. 12 symbolizes a coarse periodogram peak determination according to some examples, wherein L many candidate peaks to be confirmed, e.g., validated, may be determined in the sensing power information tensor SPIT. As previously mentioned, in some examples, this can be achieved with conventional peak detection algorithms, e.g., based on CFAR principles. As a result of block E11, a plurality, e.g., organized in the form of a list, of $L$ candidate peaks is available, each, e.g., with a tuple containing the peak indices of the peaks in the sensing power information tensor SPIT. In some examples, e.g., in case of processing the range-Doppler periodogram $\mathbf{P}$, each tuple $(\hat{n}_l, \hat{m}_l)$ comprises a row index and a column index of the $l$-th peak in the periodogram $\mathbf{P}$, e.g., allowing to derive the range and speed values of the respective peak as described in M. Braun, "OFDM Radar Algorithms in Mobile Communication Networks", Karlsruhe Institute of Technology, Doctoral Dissertation, 2014.

Element E12 of Fig. 12 symbolizes selecting at least one specific candidate peak, e.g., from the list of $L$ candidate peaks, e.g., for further processing. Thus, in some examples, see element E12 of Fig. 12, a specific candidate peak $l$ to be confirmed is selected from the previously determined list of candidate peaks, as obtained by block E11.

In some examples, it is proposed to determine precise peak information around the selected coarse candidate peak position in the sensing power information tensor SPIT, e.g., to refine the physical peak values obtained in the previous block E11, and to get more accurate amplitude and phase information associated with the respective candidate peak. In some examples, this may be used to generate the environment response of the candidate peak, e.g., as accurately as possible, e.g., before updating an overall environment response in block E14. In some examples, if only coarse information is provided, updating the overall environment response may not lead to a desired power reduction of the impulsive sidelobes (see element E15) or may create additional artifacts, even if the update is based on a valid peak.

Thus, in some examples, a comparatively precise frequency content around a candidate peak over all dimensions of the multidimensional complex sensing information tensor CSIT may be determined. In some examples, this can, e.g., be done, e.g., by comparatively fine-grained Fourier processing of all dimensions, e.g., using the second resolution explained above.

In the following, further examples related to determining the comparatively precise frequency content around a candidate peak are explained based on examples of 2D time-frequency processing. Note, however, that the principle according to the disclosure may generally also be applied to other information processing than the example 2D processing presented below. In other words, the principle of determining the comparatively precise frequency content around a candidate peak may be applied, without loss of generality, to any complex sensing information tensor CSIT and is not limited to 2D information such as, e.g., range/-Doppler periodograms.

In some examples, determining the comparatively precise frequency content around a candidate peak may be denoted as "focused Fourier analysis" and may be performed in a comparatively small area around the coarse peak. However, in some examples, e.g., contrary to the initial determination of the elements CSIT, SPIT, see, e.g., block E10, fractional frequency bins may now be used, e.g., to obtain a fine-grained section of the complex periodogram or, generally speaking, the complex sensing information tensor CSIT, e.g., around the initial coarse peak. In some examples, this fine-grained section for the current candidate peak $l$ (index omitted in the following for readability) may be obtained as

$$\mathbf{C}_{\text{fine}} = \mathbf{W}_r^{\text{T}} \mathbf{H} \mathbf{W}_s \,.$$

(equation 1)

In (equation 1), $\mathbf{W_r}$ and $\mathbf{W_s}$ are the Fourier matrices used for range and Doppler (speed) processing and write as

$$\mathbf{W}_r = \frac{1}{\sqrt{N'}} \begin{bmatrix} \omega_r^{n_0 \cdot l_0} & \omega_r^{n_0 \cdot l_1} & \cdots & \omega_r^{n_0 \cdot l_{R-1}} \\ \omega_r^{n_1 \cdot l_0} & \omega_r^{n_1 \cdot l_1} & \cdots & \omega_r^{n_1 \cdot l_{R-1}} \\ \vdots & \vdots & \ddots & \vdots \\ \omega_r^{n_{N'-1} \cdot l_0} & \omega_r^{n_{N'-1} \cdot l_1} & \cdots & \omega_r^{n_{N'-1} \cdot l_{R-1}} \end{bmatrix}$$

$$\mathbf{W}_s = \frac{1}{\sqrt{M'}} \begin{bmatrix} \omega_s^{m_0 \cdot k_0} & \omega_s^{m_0 \cdot k_1} & \cdots & \omega_s^{m_0 \cdot k_{S-1}} \\ \omega_s^{m_1 \cdot k_0} & \omega_s^{m_1 \cdot k_1} & \cdots & \omega_s^{m_1 \cdot k_{S-1}} \\ \vdots & \vdots & \ddots & \vdots \\ \omega_s^{m_{M'-1} \cdot k_0} & \omega_s^{m_{M'-1} \cdot k_1} & \cdots & \omega_s^{m_{M'-1} \cdot k_{S-1}} \end{bmatrix}$$

(equation 2)

where $\omega_r = e^{j2\pi/N'}$ and $\omega_s = e^{-j2\pi/M'}$, with $N'$ and $M'$ denoting a length of the matrices. In (equation 2), the notation $a_i$ is used to access the $i$-th element of a vector $\mathbf{a}$. The vectors $\mathbf{l}$ and $\mathbf{k}$ are of length $R$ and $S$, respectively, and comprise the fractional frequency bins to evaluate the desired ranges and speeds around the coarse peak. The vector for the ranges may, e.g., write as

$$\mathbf{l} = [\hat{n} - K \quad \hat{n} - K + \Delta \quad \hat{n} - K + 2\Delta \quad \cdots \quad \hat{n} + K]^{\text{T}}$$

(equation 3)

where $\hat{n}$ is the (integer) row index of the current coarse peak in the initial periodogram $\mathbf{P}$. Further, $\Delta$ (with $\Delta < 1$, in some examples, to get more precise information) specifies the granularity of the focused range analysis, and $K$ is an offset that controls how far the search area extends around the coarse peak.

In some examples, $\Delta = 0.1$ and $K = 1$ may be used. In similar fashion, in some examples, a vector with frequency bins to evaluate the desired speeds writes as

$$\mathbf{k} = [\widehat{m} - K \quad \widehat{m} - K + \Delta \quad \widehat{m} - K + 2\Delta \quad \cdots \quad \widehat{m} + K]^{\mathrm{T}}$$

(equation 4)

with $\widehat{m}$ being the (integer) column index of the current coarse peak in **P,** which can also be negative to allow for negative Doppler shifts/speeds. In some examples, for notational convenience, the same granularity $\Delta$ and offset $K$ may be used in (equation 3) and (equation 4). However, in some other examples, different values may be chosen. In some examples, the vectors comprising the sample indices are **n** = [0 1 2 $\cdots$ $N'$ - 1] and **m** = [0 1 2 $\cdots$ $M'$ - 1].

In some examples, the fractional bin indices are those that maximize the absolute value of the complex fine-grained complex periodogram section

$$\left(\widehat{n}_f, \widehat{m}_f\right) = \mathrm{argmax}_{n,m} |\mathbf{C}_{\mathrm{fine}}(n, m)|$$

(equation 5)

and can be used to obtain the complex coefficient comprising amplitude and phase information as

$$\widehat{c} = \mathbf{C}_{\mathrm{fine}}\left(\widehat{n}_f, \widehat{m}_f\right).$$

(equation 6)

In some examples, the fractional bin indices ($\widehat{n}_f$, $\widehat{m}_f$) are converted to range and speed estimates ($\widehat{r}, \widehat{v}$) of the peak, e.g., as described in M. Braun, "OFDM Radar Algorithms in Mobile Communication Networks", Karlsruhe Institute of Technology, Doctoral Dissertation, 2014 and, together with the complex coefficient, used in a next step, e.g., to generate the environment response of the candidate peak.

Note that, instead of using fractional frequency bins, in some examples, the CSI tensor may also be strongly zero-padded, e.g., by a factor of ($1/\Delta$). Alternatively, in some examples, interpolation-based methods based on, e.g., Dirichlet kernels between the samples available with FFT operations may be used in this step to obtain precise peak information.

Element E14 of Fig. 12 symbolizes aspects of updating an overall environment response using the previously determined refined candidate peak information, wherein knowledge about the gaps/holes in the multidimensional channel state information CSI-RXFR (Fig. 2), e.g., characterized by the first mask M1, with which the candidate peak was acquired (e.g., based on the radio frame RXFR), is exploited.

In some examples, updating the overall environment response may, e.g., comprise processing the complex sensing information tensor CSIT, e.g., after frequency analysis, e.g., Fourier processing, of the CSI tensor.

In some other examples, updating the overall environment response may, e.g., comprise processing the multidimensional CSI, e.g., involving processing of information prior to frequency analysis such as, e.g., Fourier processing.

In the following, example aspects related to processing the complex sensing information tensor CSIT by subtracting the multidimensional complex point spread function PSF are disclosed (also see block 222 et seq. of Fig. 6), wherein the multidimensional complex point spread function PSF represents the environment response of the candidate peak. As already mentioned above in the context of Fig. 6, see, for example, block 224, in some examples, the multidimensional complex point spread function PSF may be subtracted from the complex sensing information tensor CSIT, which, in some examples, represents the overall environment response, e.g., to obtain the updated overall environment response, e.g., in the form of the updated complex sensing information tensor CSIT-UPD, also see block 224 of Fig. 6.

In some examples, the multidimensional complex point spread function PSF may be defined as an impulse response due to a point source after Fourier processing. Note that the term "complex point spread function PSF" refers to the impulse response in the complex sensing information tensor CSIT (i.e., comprising complex-valued elements, e.g., before applying the magnitude squared, e.g., to obtain the sensing power information tensor SPIT). By contrast, the term point spread function is used herein when referring to the impulse response in the sensing power information tensor SPIT (i.e., after applying the magnitude squared).

As an example, the 2D range-Doppler periodogram in Fig. 4 comprises multiple such point spread functions. For instance, the peak at ca. 10 m and 1.5 m/s (lowest blue circle) together with its impulsive sidelobes marked by element E2 is the PSF in the sensing power information tensor SPIT (here, as a two-dimensional example, a 2D range-Doppler periodogram) due to a target at ca. 10 m range from the sensing system (e.g., device 10 of Fig. 2) and moving with a radial velocity of ca. 1.5 m/s relative to the sensing system, see element CP of Fig. 4.

In the following, further examples of how to determine the complex point spread function PSF of the candidate peak CP based on the previously determined refined candidate peak information PI-REF (see block 204 of Fig. 3) and how to update the overall environment response (e.g., the element CSIT) based on it, are disclosed.

In some examples, aspects of at least one of determining the complex point spread function PSF or obtaining the updated sensing information tensor CSIT-UPD, may, e.g., comprise centering the complex point spread function PSF at the estimated peak location (e.g., as obtained by element E13 of Fig. 12, also see block 223a of Fig. 6), scaling the complex point spread function PSF (also see block 223b of Fig. 6), e.g., to match the estimated complex peak value (output of element E13), and subtracting (also see block 224 of Fig. 6) the so obtained centered and scaled complex point spread function PSF from the complex sensing information tensor CSIT, wherein the updated complex sensing information tensor CSIT-UPD is obtained. In a next step, the updated sensing power information tensor SPIT-UPD may be obtained, e.g., by computing the magnitude squared of the updated sensing information tensor CSIT-UPD, see, for example, block 226 of Fig. 6.

In some examples, e.g., for a general, multidimensional case, e.g., related to the multidimensional complex sensing information tensor CSIT and to the multidimensional sensing power information tensor SPIT, e.g., not limited to a specific two-dimensional example such as a 2D range/Doppler periodogram, one or more of the following aspects may be performed:

a) Determine, e.g., define a windowing function due to gaps/holes in the multidimensional sampling data (i.e., the CSI), as may, e.g., be characterized by the first mask M1.

b) Optionally zero-pad the windowing function, and apply (I)DFTs over all dimensions to determine the complex PSF of the windowing function.

c) Multiply the complex point spread function PSF of the windowing function with the estimated complex peak coefficient (see, e.g., the scaling as explained above, also see, for example, block 223a of Fig. 6) and shift it according to its physical values (see, e.g., the centering as explained above, also see, for example, block 223b of Fig. 6) to obtain the complex point spread function PSF of the candidate peak (e.g., environment response of the candidate peak), also see, element E13 of Fig. 12.

d) Update the overall environment response (e.g., complex sensing information tensor CSIT) by subtracting the complex point spread function PSF of the candidate peak from the complex sensing information tensor CSIT.

e) Get the updated sensing power information tensor SPIT by computing the magnitude squared of the elements of the complex sensing information tensor CSIT.

As a further example, for the example case of 2D range-Doppler processing, examples of the previous aspects a) to e) may, e.g., be implemented as follows:

The windowing function due to the TDD pattern as, e.g., shown in Fig. 11 and described analytically with Equation 7 of [Reference 1] can, e.g., be realized by defining a 2D matrix of the same size as the CSI matrix $\mathbf{H}$, where DL symbols have the value "1" and UL symbols have the value "0".

In some examples, the complex point spread function PSF of the windowing function may be obtained by applying an IDFT over the frequency domain (here rows of $\mathbf{H}$) and a DFT over the time domain (here columns of $\mathbf{H}$). Note that, to obtain a more accurate complex point spread function PSF of the candidate peak in the next step, in some examples, the windowing function may be zero-padded to obtain a more fine-grained version of the complex PSF of the windowing function.

In some examples, the complex point spread function PSF of the windowing function may be multiplied (e.g., in the sense of the scaling, as explained above) with the complex coefficient $\hat{c}$ of the candidate peak and may be shifted (e.g., in the sense of the centering, as explained above) according to its range and speed values $\hat{r}$ and $\hat{v}$ to obtain the complex point spread function PSF of the candidate peak $\mathbf{C^{peak}}$. In some examples, an updated complex periodogram $\mathbf{C'}$ may be obtained by subtracting $\mathbf{C^{peak}}$ from the current complex periodogram $\mathbf{C}$. After that, in some examples, an updated periodogram $\mathbf{P'}$, which may, e.g., be used in element E15 for evaluating power features, may be determined by computing the magnitude squared of the elements of the complex periodogram $\mathbf{C'}$.

In some other examples, e.g., alternatively or additionally to the aforementioned approach, the multidimensional complex point spread function PSF of the candidate peak $\mathbf{C^{peak}}$ (e.g., to be subtracted from $\mathbf{C}$) may also be determined analytically. In that case, the analytically derived complex PSF of the windowing function may be evaluated accounting for the shift due to the estimated candidate peak values and may then be scaled to match the estimated complex peak value.

Note that the aforementioned approaches associated with processing the complex point spread function PSF, and, for example, contrary to at least some of the further example embodiments introduced in the following, may directly work with the complex sensing information tensor CSIT (e.g., *after* Fourier processing of the CSI). Therefore, the aforementioned approaches associated with processing the complex point spread function PSF do not require multi-dimensional Fourier processing, e.g., to determine the updated overall environment response as, e.g., characterized by the updated complex sensing information tensor CSIT, but rather, e.g., only, the subtraction of the complex point spread function PSF (also see block 224 of Fig. 6, for example). Thus, in some examples, the aforementioned example approaches associated with processing the complex point spread function PSF may result in savings of computational complexity.

In the following further example embodiments and aspects of the disclosure are provided, which are, for example, not related to processing the complex point spread function PSF.

In some examples, it is proposed to operate in a multidimensional CSI domain, wherein parameters obtained in the previous steps, see, for example element E13 of Fig. 12, may be used to determine, e.g., generate a multidimensional CSI contribution tensor of a current (e.g., candidate) peak (e.g., representing a multidimensional environment response of the peak in the CSI domain) considering the peak was acquired without the desired CSI window, also see, for example, Fig. 6 as explained above. In some examples, using the multidimensional CSI contribution tensor of the current candidate peak, an updated overall multidimensional environment response in the CSI domain can be obtained. Then, the updated sensing power information tensor SPIT-UPD' (also see block 236 of Fig. 7), e.g., representing an updated overall multidimensional environment response after Fourier processing as input, e.g., for element E15 of Fig. 12, may be determined by Fourier transformation of all dimensions of the updated overall multidimensional environment response in the CSI domain and taking the magnitude squared of the complex numbers in the resulting complex sensing information tensor CSIT.

As an example, in the case of 2D range-Doppler processing, example aspects of the above-mentioned processing in the CSI domain may be implemented as follows. In some examples, a time-frequency channel state information, e.g., for a full frame without TDD gaps (e.g., absent the undesired first mask M1) may be expressed as

$$\mathbf{H}^{\mathrm{peak}} = \hat{c}' \cdot \mathbf{a}(\hat{r})\mathbf{b}(\hat{v})^{\mathrm{T}}$$

(equation 7)

where the vectors $\mathbf{a}(\hat{r})$ and $\mathbf{b}(\hat{v})$ describing the phase progressions over subcarriers and symbols, based on the estimated range $\hat{r}$ and speed $\hat{v}$ of the peak (as, e.g., obtained by element E13 of Fig. 12), may, e.g., write as

$$\mathbf{a}(\hat{r}) = \begin{bmatrix} 1 & e^{-j4\pi\Delta f \cdot \hat{r}/c_0} & \dots & e^{-j4\pi(N-1)\Delta f \cdot \hat{r}/c_0} \end{bmatrix}^{\mathrm{T}}$$

(equation 8)

and

$$\mathbf{b}(\hat{v}) = \begin{bmatrix} 1 & e^{j4\pi T_0 f_c \cdot \hat{v}/c_0} & \dots & e^{j4\pi(M-1)T_0 f_c \cdot \hat{v}/c_0} \end{bmatrix}^{\mathrm{T}},$$

(equation 9)

with $\Delta f$ being the subcarrier spacing, $T_0$ the OFDM symbol duration (including cyclic prefix), $f_c$ the carrier frequency, and $c_0$ the speed of light. Further, in some examples, the complex coefficient $\hat{c}$ comprising amplitude and phase information of the peak may be scaled according to

$$\hat{c}' = \frac{\sqrt{N'M'}}{NMT_{\mathrm{TDD}}} \cdot \hat{c}$$

(equation 10)

e.g., to account for processing gain and zero-padding in the DFT operations as well as the TDD duty cycle given as

$$T_{\mathrm{TDD}} = \frac{M_{\mathrm{DL}}}{M_{\mathrm{UL}}+M_{\mathrm{DL}}}.$$

(equation 11)

In some examples, scaling the amplitude with $1/T_{\text{TDD}}$ may account for the fact that the initial CSI **H** was obtained with the system performing DL sensing operations only for a portion of the radio frame, e.g., associated with the first mask M1.

In some examples, the CSI contribution of the current peak $\mathbf{H}^{\text{peak}}$ may be used to obtain an updated CSI matrix **H'** and subsequently an updated periodogram **P'**.

In some examples, there are at least two different approaches to update the CSI matrix:

Approach 1: Remove peak contribution from DL parts: In these examples, the peak contribution may be subtracted from the DL parts of the initial CSI matrix, which coherently removes the peak. In some examples, this coherent peak removal can be expressed as

$$\mathbf{H}' = \mathbf{H} - \mathbf{H}^{\text{peak}}\text{diag}(\mathbf{d})$$

(equation 12)

where **d** is a vector with length according to the dimension with the sampling holes (associated with the first mask M1) that comprises zeroes and ones to select the sample points. In some examples, the vector **d** represents a length $M$ vector whose entries are "one" for indices with DL symbols and otherwise "zero". Further, diag($\cdot$) denotes a diagonal square matrix, where the values in parentheses are on the main diagonal and entries outside the main diagonal are zero.

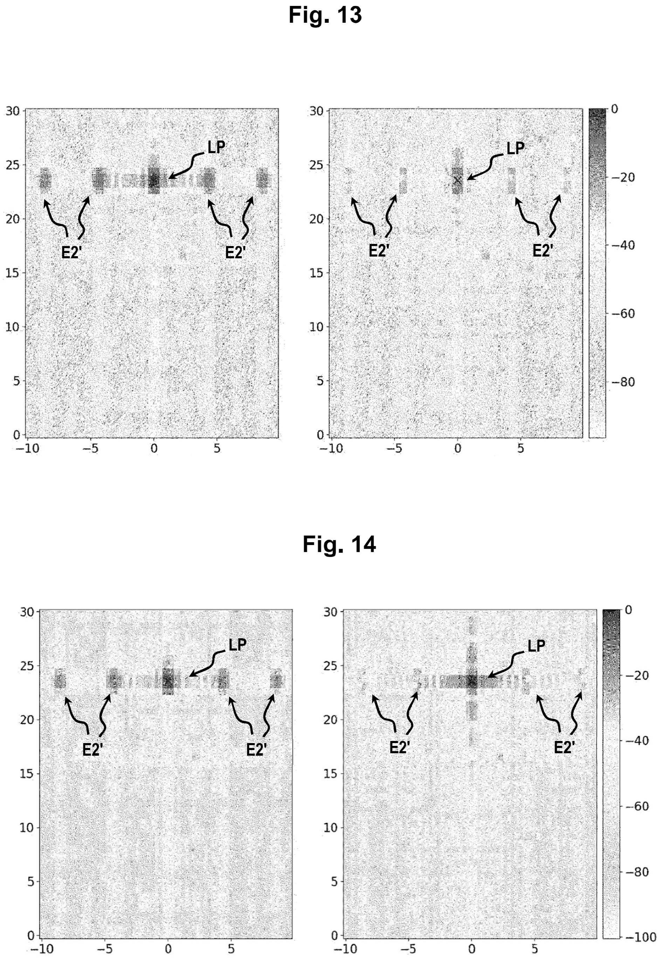

In this regard, Fig. 13 shows two example periodograms related to ISAC measurements before (left periodogram of Fig. 13) and after (right periodogram of Fig. 13) coherently removing a peak contribution according to the examples. In other words, the left periodogram of Fig. 13 can, in some examples, be obtained based on the initial CSI matrix **H,** and the right periodogram of Fig. 13 can, in some examples, be obtained based on the updated CSI matrix **H'** as obtained according to equation 12. As can be seen from Fig. 13, subtracting the CSI contribution of the selected peak not only removes most of the currently selected peak, see reference sign LP and the cross symbol, but may also significantly reduce the power of the impulsive sidelobes E2', e.g., allowing the peak at position LP to be detected as a valid one, e.g., in a subsequent processing. In some examples, similar periodograms may, e.g., be obtained by using the above-described approach related to determining the complex point spread function PSF, see, for example, block 222 et seq. of Fig. 6, wherein, e.g., the updated sensing power information tensor SPIT-UPD, as, e.g., obtained by block 226, may, in some examples, represent such periodogram.

In some other examples according to a second approach, i.e., "Approach 2", for performing an update of the CSI matrix, the UL parts of the initial CSI matrix may be filled with the peak contribution, e.g., according to

$$\mathbf{H}' = \mathbf{H} + \mathbf{H}^{\text{peak}}\text{diag}(\mathbf{u})$$

(equation 13)

where **u** is again a vector with length according to the dimension with the sampling holes that comprises zeroes and ones. However, in the present, second approach, the vector **u** may now be used to select the sampling holes. In some examples, vector **u** may be a length $M$ vector whose entries are "one" for UL symbols and otherwise "zero".

In this regard, Fig. 14 shows two example periodograms related to ISAC measurements before (left periodogram of Fig. 14) and after (right periodogram of Fig. 14) filling the UL parts with a peak contribution according to the examples. The periodograms of Fig.14 are based on the same initial CSI matrix **H** from ISAC as used for determining the periodograms of Fig. 13. Contrary to Fig. 13, however, in Fig. 14, the peak power, see position LP, is amplified, since the target contribution is now also present in the previously empty UL slots. However, also with this approach the power of the impulsive sidelobes E2' reduces visibly.

Element E15 of Fig. 12 symbolizes an examination of, e.g., the power of the impulsive sidelobes E2' (see, for example, Fig. 13, 14) in the periodograms before and after the overall environment response update of element E14 (Fig. 12), e.g., to determine whether a currently selected, specific candidate peak (see position LP of Fig. 13, 14) is valid or not. In some examples, a processing of information according to element E15 et seq., is applicable to the output of element E14, e.g., independent of whether the output of element E14 has been obtained by processing aspects of the complex point spread function PSF (see, e.g., Fig. 6) or any of the CSI-based approaches (see, e.g., Fig. 7) mentioned above.

In other words, in some examples, element E15 involves an examination of the power of the impulsive sidelobes in the sensing power information tensor SPIT and in the updated sensing power information tensor SPIT-UPD, SPIT-UPD', e.g., before and after an overall environment response update (element E15), e.g., to determine whether the candidate peak is valid or not.

In some examples, knowledge, e.g., a-priori knowledge, of the first mask M1, e.g., the TDD pattern structure (see Fig. 11), may be leveraged, e.g., to obtain the locations of bins with expected contributions from impulsive sidelobes E2'. In other words, for examples of 2D range-Doppler processing, knowledge of the TDD pattern structure (see Fig. 11) may be leveraged to obtain the locations of bins with the expected contributions from impulsive sidelobes. Since in this case the UL/DL pattern repeats $R = 8$ times, the sidelobes are shifted by $a \cdot R \cdot \frac{c_0}{2MT_0 f_c}$, $a \in \mathbb{Z}$, see, for example, [Reference 1]. In some examples, e.g., for the parameters that are used for obtaining the periodograms of Figs. 13 and 14, and that can be found in [Reference 1], this may, e.g., roughly, amount to $a \cdot 4.4 \frac{m}{s}$.

In some examples, Fig. 13, 14, the bins shifted by $a \cdot 4.4 \frac{m}{s}$ in horizontal direction around the candidate peak LP may be used as center points for determining ellipses, e.g., virtual ellipses, (not shown). In some examples, all bins inside those virtual ellipses may be considered for a determination, e.g., computation of a power of the impulsive sidelobes E2'. In some examples, if an average power of the bins in all ellipses in the updated periodogram **P'** (see, for example, right side of Fig. 13, 14) is smaller than in the initial periodogram **P** (see, for example, left side of Fig. 13, 14), the candidate peak LP may be declared to be valid, and the procedure of Fig. 12 may continue with element E16. In some examples, otherwise, the candidate peak may be assumed to be caused by or represent, respectively, an impulsive sidelobe, and the procedure of Fig. 13 may continue with element E18.

In some examples, one or more other approaches may be used to determine the presence of a true, e.g., valid, peak, e.g., based on the power of the impulsive sidelobes E2', e.g., before and after updating the CSI, e.g., based on hypothesis testing.

Element E16 of Fig. 12 symbolizes storing information associated with a tested, e.g., validated candidate peak, e.g., "peak value storing". In some examples, the peak range $\hat{r}_l$ and speed $\hat{v}_l$ (and, optionally, one or more additional values that may, e.g., be of interest for further processing, like amplitude and/or power and/or others) may be stored, e.g., in case a power reduction of the impulsive sidelobes in the updated periodogram **P'** was determined in the previous block E15. Otherwise, the peak may be deemed to stem from an impulsive sidelobe and is discarded.

In some examples, regarding the general case of the updated sensing power information tensor SPIT-UPD, SPIT-UPD' (e.g., instead of a specific two-dimensional case associated with the updated periodogram **P'**), the previously obtained values corresponding to the confirmed peak in the updated sensing power information tensor SPIT-UPD, SPIT-UPD' may be stored, e.g., in case the updated power features check was successful in the previous step.

The dashed rounded rectangle RR1 of Fig. 12 symbolizes aspects or elements E12, E13, E14, E15, E16 which, in some examples, may be denoted as a "Peak Confirmation Procedure", as these aspects may contribute to distinguish valid peaks LP of the periodogram from impulsive sidelobes E2'.

In some examples, the aspects E12, E13, E14, E15, E16 of Fig. 12, or the "Peak Confirmation Procedure" RR1, respectively, may form part, e.g., may be integrated into, another, e.g., iterative, procedure, e.g., an "iterative peak checking" RR2, which may comprise further elements E17, E18, as explained in the following.

In some examples, Fig. 12, e.g., in addition to storing the peak values in element E16, the multidimensional environment response, e.g., in the form of the complex sensing information tensor CSIT and/or of the sensing power information tensor SPIT may be updated, e.g., for the next iteration, e.g., after a successful check (element E15), see element E17 of Fig. 12.

In some examples, e.g., associated with processing the complex point spread function PSF, as explained above, see, for example, aspects 222 et seq. of Fig. 6) both the complex sensing information tensor CSIT and the sensing power information tensor SPIT may be updated in block E17. In some examples related to a 2D-based cases of range-Doppler processing, this may, e.g., correspond to updating the complex periodogram and the periodogram, respectively, i.e., **C = C'** and **P = P'**.

In some other examples, e.g., related to alternative embodiments or approaches, see the above-explained Approaches 1, 2, an update of the environment response according to element E17 may involve saving both the multidimensional CSI tensor and the sensing power information tensor SPIT. In some examples, for range-Doppler processing, this may, e.g., correspond to updating the 2D time-frequency CSI and the periodogram, respectively, i.e., **H = H'** and **P = P'**.

In some examples, the so obtained updated environment responses may serve as initial environment responses for the next iteration of the iterative procedure RR2, e.g., for a peak confirmation of a next peak of the plurality of candidate peaks.

As an example, $L$ many iterations may be provided, e.g., for the "iterative peak checking" RR2, e.g., to process all of the $L$ candidate peaks CP as, e.g., obtained by element E11. In this regard, element E18 may comprise determining whether all of the $L$ candidate peaks CP have already been processed, e.g., using the peak confirmation RR1. If so, the procedure may terminate, see arrow a1 of Fig. 12. Otherwise, e.g., if not (yet) all of the $L$ candidate peaks CP have already been processed, the procedure may continue with element E12, see arrow a2 of Fig. 12, e.g., starting a subsequent iteration. In some examples, an index variable l for counting the iterations may be incremented, e.g., prior to or when reaching element E18.

In some examples, Fig. 12, element E18 may be considered as a convergence check, wherein, e.g., a check is performed whether any (further) candidate peaks are left to be checked in the initially determined list (e.g., result of element E11).

In some examples, the updated environment response, as, e.g., characterized by at least one of the updated complex sensing information tensor CSIT-UPD, or the updated sensing power information tensor SPIT-UPD, SPIT-UPD' or the updated CSI matrix **H'** may, e.g., only, be used in elements E14 and E15, and the initially determined environment response from element E10 may still be used for the determination, e.g., computation, of the fine-grained information according to element E13.

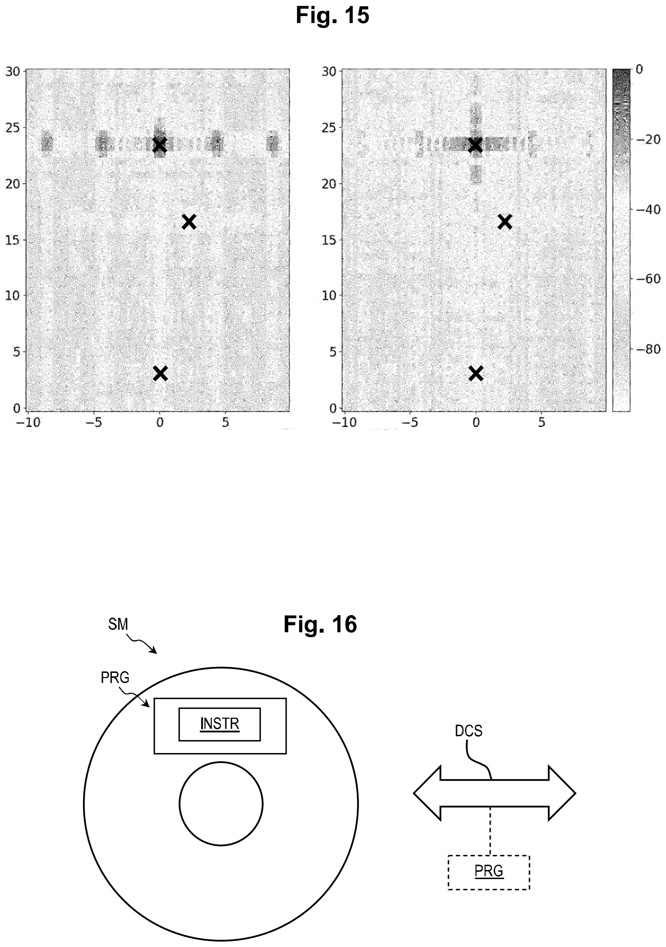

In some examples, Fig. 12, the iterative procedure RR2 explained above may, e.g., facilitate a peak confirmation for comparatively weak peaks, as potentially interfering stronger contributions in the complex sensing information tensor CSIT or the associated updated sensing power information tensor SPIT-UPD, SPIT-UPD', e.g., in the form of a periodogram, e.g., sidelobes, have been removed (or at least mitigated) previously. Moreover, in some examples, e.g., in case of filling the UL parts with peak CSI contributions according to element E14, the iterative procedure may yield a "cleaned" version of the periodogram. An example of this is depicted in Fig. 15, where the UL parts of the CSI matrix have been filled with all valid peaks (marked by the crosses). In some examples, this cleaned version of the periodogram (see right side of Fig. 15) may be used for further processing, e.g., in downstream tasks. The periodogram on the left side of Fig. 16 indicates a state prior to the "cleaning", as mentioned above.

In some examples, Fig. 12, instead of determining, e.g., computing, the refined peak information for a specific candidate peak as determined in element E12, the refined peak information may be determined for all L peaks, e.g., at once, e.g., in block E13, e.g., before performing the peak confirmation RR1 and, optionally, the iterative peak checking RR2. In other words, in these embodiments, element E13 yields the refined peak information for all $L$ candidate peaks, which may, in some examples, be used by the subsequent blocks or procedures RR1, RR2. In some examples, this applies to examples involving processing of the complex point spread function for element E14, as well as to other examples involving processing information in the CSI domain, see the above explained example approaches 1, 2.

Some examples, Fig. 16, relate to a computer program PRG comprising instructions INSTR which, when executed by an apparatus 100, 100', cause the apparatus 100, 100' to perform the method according to the disclosure.

Some examples, Fig. 16, relate to a computer-readable storage medium SM, for example a non-transitory computer-readable storage medium SM, comprising the computer program PRG according to the disclosure.

Some examples, Fig. 16, relate to a data carrier signal DCS carrying and/or characterizing the computer program PRG according to the disclosure.

## Claims

1. An apparatus (100') for a device (10) for a wireless communication system (1), the apparatus (100) comprising means (102') for determining (202) at least one candidate peak (CP) of a sensing power information tensor (SPIT) derivable from a complex sensing information tensor (CSIT) acquired with a first mask (M1) and associated with multi-dimensional channel state information (CSI-RXFR) obtained based on at least one received radio frame (RXFR), determining (204), for the at least one candidate peak (CP), refined peak information (PI-REF) based on the first mask (M1) and a predetermined second mask (M2).

2. The apparatus (100) according to claim 1, further comprising means (102') for performing at least one of: a) updating (205), based on the refined peak information (PI-REF), the complex sensing information tensor (CSIT) to obtain an updated complex sensing information tensor (CSIT-UPD), or b) updating (207), based on the refined peak information (PI-REF), the sensing power information tensor (SPIT) to obtain an updated sensing power information tensor (SPIT-UPD).

3. The apparatus (100) according to claim 2, further comprising means (102') for determining (209) whether the candidate peak (CP) is valid based on at least one of the sensing power information tensor (SPIT) or the updated sensing power information tensor (SPIT-UPD).

4. The apparatus (100) according to any of the preceding claims, further comprising means (102') for performing at least one of: a) determining (210) the complex sensing information tensor (CSIT) based on a first multidimensional frequency analysis (MFA-1) of a multidimensional channel state information tensor (CSI-T) characterizing the multidimensional channel state information (CSI-RXFR) using a first resolution, or b) determining (212) the sensing power information tensor (SPIT) based on the complex sensing information tensor (CSIT).

5. The apparatus (100) according to claim 4, further comprising means (102') for determining (220) a refined portion (CSIT-REF) of the complex sensing information tensor (CSIT) for the at least one candidate peak (CP) based on a second multidimensional frequency analysis (MFA-2) of at least a portion of the multidimensional channel state information tensor (CSI-T) associated with the at least one candidate peak (CP) using a second resolution, which is higher than the first resolution.

6. The apparatus (100) according to claim 5, further comprising means (102') for determining (222) a multidimensional complex point spread function (PSF) associated with the at least one candidate peak (CP) based on the refined portion (CSIT-REF) of the complex sensing information tensor (CSIT), wherein the multidimensional complex point spread function (PSF) characterizes an impulse response of a point source after a frequency analysis, subtract (224) the multidimensional point spread function (PSF) from the complex sensing information tensor (CSIT), wherein an updated complex sensing information tensor (CSIT-UPD) is obtained.

7. The apparatus (100) according to claim 6, further comprising means (102') for performing at least one of: a) centering (223a) the multidimensional complex point spread function (PSF) at an estimated location of the at least one candidate peak (CP) derivable based on the refined portion (CSIT-REF) of the complex sensing information tensor (CSIT), or b) scaling (223b) the multidimensional complex point spread function (PSF) based on the refined portion (CSIT-REF) of the complex sensing information tensor (CSIT).

8. The apparatus (100) according to any of the claims 6 to 7, further comprising means (102') for determining (226) an updated sensing power information tensor (SPIT-UPD) based on the updated complex sensing information tensor (CSIT-UPD) .

9. The apparatus (100) according to any of the preceding claims, further comprising means (102') for determining (230), for the at least one candidate peak (CP), a contribution (CSI-CONTRIB) to the multidimensional channel state information (CSI-RXFR), determine (232), based on the contribution (CSI-CONTRIB) of the at least one candidate peak (CP) to the multidimensional channel state information (CSI-RXFR), updated multidimensional channel state information (CSI-UPD).

10. The apparatus (100) according to claim 9, further comprising means (102') for performing (234) a frequency analysis based on the updated multidimensional channel state information (CSI-UPD), wherein an updated complex sensing information tensor (CSIT-UPD') is obtained, determine (236) an updated sensing power information tensor (SPIT-UPD') based on the updated complex sensing information tensor (CSIT-UPD'), and wherein determining (232) the updated multidimensional channel state information (CSI-UPD) comprises at least one of: a) removing (232a) the contribution (CSI-CONTRIB) of the at least one candidate peak (CP) from a portion of the channel state information associated with a downlink direction, or b) adding (232b) the contribution (CSI-CONTRIB) of the at least one candidate peak (CP) to a portion of the channel state information associated with an uplink direction.

11. The apparatus (100) according to any of the claims 2 to 10, further comprising means (102') for comparing (240) the updated sensing power information tensor (SPIT-UPD; SPIT-UPD') with the sensing power information tensor (SPIT), determine (242) whether the at least one candidate peak (CP) is a valid peak based on the comparison (240).

12. The apparatus (100) according to claim 11, wherein the comparing (240) comprises comparing (240a) a first power associated with at least one bin of the at least one candidate peak (CP) in the updated sensing power information tensor (SPIT-UPD; SPIT-UPD') with a second power associated with at least one corresponding bin of the at least one candidate peak (CP) in the sensing power information tensor (SPIT), wherein determining (242) whether the at least one candidate peak (CP) is a valid peak comprises determining (242a) that the at least one candidate peak (CP) is a valid peak if the first power is less than the second power.

13. The apparatus (100) according to any of the preceding claims, further comprising means (102') for determining (250) a predetermined number (N-CP) of candidate peaks, and performing (252) an iterative peak checking for the predetermined number (N-CP) of candidate peaks, the iterative peak checking comprising: selecting (252a) a specific candidate peak (CP') of the predetermined number (N-CP) of candidate peaks, determining (252b) whether the selected candidate peak (CP') is valid, if the selected candidate peak (CP') is valid, updating (252c) the complex sensing information tensor (CSIT) to obtain a or the updated complex sensing information tensor (CSIT-UPD) and updating (252c') the sensing power information tensor (SPIT) to obtain a or the updated sensing power information tensor (SPIT-UPD; SPIT-UPD'), and repeating (252d) at least one of the aspects (252a, 252b, 252c) of the iterative peak checking (252) based on the updated complex sensing information tensor (CSIT-UPD) if at least one further candidate peak of the predetermined number (N-CP) of candidate peaks has not yet been checked.

14. A method for a wireless communication system (1), comprising: determining (202) at least one candidate peak (CP) of a sensing power information tensor (SPIT) derivable from a complex sensing information tensor (CSIT) acquired with a first mask (M1) and associated with multidimensional channel state information (CSI-RXFR) obtained based on at least one received radio frame (RXFR), determining (204), for the at least one candidate peak (CP), refined peak information (PI-REF) based on the first mask (M1) and a predetermined second mask (M2).

15. A device (10) for a wireless communication system (1), comprising at least one apparatus (100; 100') according to any of the claims 1 to 13.

# Fig. 1A

# Fig. 1B

# Fig. 2

# Fig. 3

200 ⟶ DETERMINE COMPLEX SENSING INFORMATION TENSOR

| CSIT

202 ⟶ DETERMINE AT LEAST ONE CANDIDATE PEAK OF SENSING POWER INFORMATION TENSOR ASSOCIATED WITH COMPLEX SENSING INFORMATION TENSOR

| CP; N-CP

204 ⟶ DETERMINE, FOR AT LEAST ONE CANDIDATE PEAK, REFINED PEAK INFORMATION

| PI-REF

205 ⟶ UPDATE, BASED ON REFINED PEAK INFORMATION, COMPLEX SENSING INFORMATION TENSOR

| CSIT-UPD

207 ⟶ UPDATE, BASED ON REFINED PEAK INFORMATION, SENSING POWER INFORMATION TENSOR

| SPIT-UPD

209 ⟶ DETERMINE WHETHER CANDIDATE PEAK IS VALID BASED ON AT LEAST ONE OF SENSING POWER INFORMATION TENSOR OR UPDATED SENSING POWER INFORMATION TENSOR

# Fig. 4

# Fig. 5

210 — DETERMINE COMPLEX SENSING INFORMATION TENSOR BASED ON FIRST MULTIDIMENSIONAL FREQUENCY ANALYSIS USING FIRST RESOLUTION

CSIT, MFA-1

212 — DETERMINE SENSING POWER INFORMATION TENSOR BASED ON COMPLEX SENSING INFORMATION TENSOR

SPIT

# Fig. 6

**220** — DETERMINE REFINED PORTION OF COMPLEX SENSING INFORMATION TENSOR FOR AT LEAST ONE CANDIDATE PEAK BASED ON SECOND MULTIDIMENSIONAL FREQUENCY ANALYSIS USING SECOND RESOLUTION HIGHER THAN FIRST RESOLUTION

CSIT-REF, MFA-2

**222** — DETERMINE MULTIDIMENSIONAL COMPLEX POINT SPREAD FUNCTION ASSOCIATED WITH AT LEAST ONE CANDIDATE PEAK BASED ON REFINED PORTION OF COMPLEX SENSING INFORMATION TENSOR

PSF

**223a** — CENTER MULTIDIMENSIONAL COMPLEX POINT SPREAD FUNCTION AT ESTIMATED LOCATION OF AT LEAST ONE CANDIDATE PEAK BASED ON REFINED PORTION OF COMPLEX SENSING INFORMATION TENSOR

PSF

**223b** — SCALE MULTIDIMENSIONAL COMPLEX POINT SPREAD FUNCTION BASED ON REFINED PORTION OF COMPLEX SENSING INFORMATION TENSOR

PSF

**224** — SUBTRACT MULTIDIMENSIONAL COMPLEX POINT SPREAD FUNCTION FROM COMPLEX SENSING INFORMATION TENSOR

CSIT-UPD

**226** — DETERMINE UPDATED SENSING POWER INFORMATION TENSOR BASED ON UPDATED COMPLEX SENSING INFORMATION TENSOR

SPIT-UPD

# Fig. 7

230 — DETERMINE, FOR AT LEAST ONE CANDIDATE PEAK, CONTRIBUTION TO MULTIDIMENSIONAL CHANNEL STATE INFORMATION

↓ CSI-CONTRIB

232, 232a, 232b — DETERMINE UPDATED MULTIDIMENSIONAL CHANNEL STATE INFORMATION BASED ON CONTRIBUTION TO MULTIDIMENSIONAL CHANNEL STATE INFORMATION

↓ CSI-UPD

234 — PERFORM FREQUENCY ANALYSIS BASED ON UPDATED MULTIDIMENSIONAL CHANNEL STATE INFORMATION

↓ CSIT-UPD'

236 — DETERMINE UPDATED SENSING POWER INFORMATION TENSOR BASED ON UPDATED COMPLEX SENSING INFORMATION TENSOR CSIT-UPD'

↓ SPIT-UPD'

# Fig. 8

232a — REMOVE CONTRIBUTION OF AT LEAST ONE CANDIDATE PEAK FROM PORTION OF CHANNEL STATE INFORMATION ASSOCIATED WITH DOWNLINK DIRECTION

232b — ADD CONTRIBUTION OF AT LEAST ONE CANDIDATE PEAK TO PORTION OF CHANNEL STATE INFORMATION ASSOCIATED WITH UPLINK DIRECTION

# Fig. 9

240,
240a

COMPARE UPDATED SENSING POWER INFORMATION TENSOR WITH SENSING POWER INFORMATION TENSOR

242,
242a

DETERMINE, BASED ON COMPARISON, WHETHER AT LEAST ONE CANDIDATE PEAK IS VALID

# Fig. 10

250

DETERMINE PREDETERMINED NUMBER OF CANDIDATE PEAKS

N-CP

252a

SELECT SPECIFIC CANDIDATE PEAK

CP'

252b

DETERMINE WHETHER SELECTED CANDIDATE PEAK IS VALID

CSI-CONTRIB-I

252c,
252c'

IF SELECTED CANDIDATE PEAK IS VALID, UPDATE COMPLEX SENSING INFORMATION TENSOR AND UPDATE SENSING POWER INFORMATION TENSOR

CSIT-UPD, SPIT-UPD

252

252d

**Fig. 11**

# Fig. 12

# Fig. 13

# Fig. 14

# Fig. 15

# Fig. 16

# EUROPEAN SEARCH REPORT

Europäisches Patentamt
European Patent Office
Office européen des brevets

**Application Number**

EP 25 20 7937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILD THORSTEN ET AL: "6G Integrated Sensing and Communication: From Vision to Realization", 2023 20TH EUROPEAN RADAR CONFERENCE (EURAD), EUROPEAN MICROWAVE ASSOCIATION (EUMA), 20 September 2023 (2023-09-20), pages 355-358, XP034454491, DOI: 10.23919/EURAD58043.2023.10289474 [retrieved on 2023-10-26] * the whole document * | 1-15 | INV. H04L25/02 |
| X | US 7 250 900 B2 (INFORMATION SYSTEMS LAB INC [US]) 31 July 2007 (2007-07-31) * claims 17,20 * * figures 3A,4,5A-B * * column 3, line 13 - line 54 * * column 4, line 45 - line 59 * * column 5, line 13 - column 8, line 54 * | 1-15 | |
| A | PAOLO TOSI ET AL: "Feasibility of Non-Line-of-Sight Integrated Sensing and Communication at mmWave", ARXIV.ORG, CORNELL UNIVERSITY LIBRARY, 201 OLIN LIBRARY CORNELL UNIVERSITY ITHACA, NY 14853, 18 June 2024 (2024-06-18), XP091793014, * the whole document * | 1-15 | **TECHNICAL FIELDS SEARCHED (IPC)** H04L |
| A | MAXIMILIAN BAUHOFER ET AL: "Multi-Target Localization in Multi-Static Integrated Sensing and Communication Deployments", ARXIV.ORG, CORNELL UNIVERSITY LIBRARY, 201 OLIN LIBRARY CORNELL UNIVERSITY ITHACA, NY 14853, 13 June 2023 (2023-06-13), XP091537335, * the whole document * | 1-15 | |

-/--

The present search report has been drawn up for all claims

| Place of search | Date of completion of the search | Examiner |
|---|---|---|
| Munich | 6 February 2026 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 20 7937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | MARCUS HENNINGER ET AL: "Target Detection for ISAC with TDD Transmission", ARXIV.ORG, CORNELL UNIVERSITY LIBRARY, 201 OLIN LIBRARY CORNELL UNIVERSITY ITHACA, NY 14853, 16 May 2025 (2025-05-16), XP092025622, * the whole document * ----- | 1-15 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Munich | 6 February 2026 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

page 2 of 2

# EP 4 734 459 A1

## ANNEX TO THE EUROPEAN SEARCH REPORT
## ON EUROPEAN PATENT APPLICATION NO.

EP 25 20 7937

06-02-2026

| Patent document cited in search report | | Publication date | Patent family member(s) | | Publication date |
|---|---|---|---|---|---|
| US 7250900 | B2 | 31-07-2007 | US | 2007040729 A1 | 22-02-2007 |
| | | | WO | 2007055749 A2 | 18-05-2007 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. TOSI** ; **M. HENNINGER** ; **L. GIROTO DE OLIVEIRA** ; **S. MANDELL**. Feasibility of Non-Line-of-Sight Integrated Sensing and Communication at mmWave. *arXiv preprint (v1)*, 2024, https://arxiv.org/abs/2406.12828
- **R. SCHMIDT**. Multiple Emitter Location and Signal Parameter Location. *IEEE Transactions on Antenna and Propagation*, 1986, vol. 34

- **P. TOSI** ; **M. HENNINGER** ; **L. GIROTO DE OLIVEIRA** ; **S. MANDELLI**. Feasibility of Non-Line-of-Sight Integrated Sensing and Communication at mmWave. *arXiv preprint (v1)*, 2024, https://arxiv.org/abs/2406.12828
- **M. BRAUN**. OFDM Radar Algorithms in Mobile Communication Networks. *Karlsruhe Institute of Technology, Doctoral Dissertation*, 2014